# EUROPÄISCHE PATENTSCHRIFT

(11) **EP 2 274 238 B1**
(45) Veröffentlichungstag und Bekanntmachung des Hinweises auf die Patenterteilung: **23.05.2012**
(21) Anmeldenummer: 09742012.9
(22) Anmeldetag: 29.04.2009
(51) Int. Cl.: C01F 7/48

(54) **VERFAHREN ZUR HYDROLYSE VON FESTEN METALLSALZEN MIT WÄSSRIGEN SALZLÖSUNGEN**
METHOD FOR HYDROLYZING SOLID METALLIC SALTS WITH AQUEOUS SALINE SOLUTIONS
PROCÉDÉ D'HYDROLYSE DE SELS MÉTALLIQUES SOLIDES À L'AIDE DE SOLUTIONS SALINES ACQUEUSES

(30) Priorität: 06.05.2008 DE 102008001577
(43) Veröffentlichungstag der Anmeldung: 19.01.2011
(73) Patentinhaber: Wacker Chemie AG, 81737 München (DE)
(72) Erfinder: STEPP, Michael, A-5122 Überackern (AT); PÄTZOLD, Uwe, 84489 Burghausen (DE)
(74) Vertreter: Killinger, Andreas
(86) Internationale Anmeldenummer: PCT/EP2009/055215
(87) Internationale Veröffentlichungsnummer: WO 2009/135794

(56) Entgegenhaltungen:
- EP-A- 0 767 140
- EP-A- 0 909 623
- GB-A- 437 022
- GB-A- 1 131 354
- US-A- 3 878 291
- US-A- 5 182 095

## Beschreibung

Die Erfindung betrifft ein Verfahren zur Hydrolyse von hydrolysierbaren festen Metallsalzen mit wässrigen Salzlösungen.

Bei der Umsetzung von Chlorsilanen aus metallurgischem Silicium und HCl-Gas zu Trichlorsilan (TCS) und Siliciumtetrachlorid (STC), die beispielsweise als Rohstoffe zur Erzeugung von halbleiterreinem Silicium, Solarsilicium sowie hochdisperser Kieselsäure dienen, bilden sich als Nebenprodukte Metallsalze, hauptsächlich Metallchloride. Insbesondere Aluminiumchlorid und Eisenchlorid scheiden sich beim Abkühlen des Reaktionsgemisches als Feststoff ab. Eine gezielte Abscheidung der Feststoffe ist verfahrenstechnisch wichtig, um Verlegungen bei der destillativen Aufarbeitung der flüssigen Silane zu vermeiden. Zur Abtrennung der festen Metallchloride aus dem Prozess sind verschiedene Verfahren bekannt.

In DE 2623290 A1 ist die Abscheidung von AlCl₃, vermischt mit FeCl₃ aus dem gasförmigen Reaktionsgemisch von Chlorsilanen in Liebig-Rohren beschrieben. Nicht beschrieben ist die Reinigung der Liebigrohre.

Da es sich bei den Feststoffen i.d.R. um Gemische an hochkorrosiven Verbindungen handelt, wird die unmittelbar anschließende Hydrolyse und gegebenenfalls Neutralisation der entstehenden wässrigen Lösungen einer Aufreinigung der Feststoffe (für eine Verwertung) vorgezogen. Bei der Hydrolyse der wasserfreien Metallchloride (insbesondere des Hauptbestandteils Aluminiumchlorid) wird bekanntermaßen eine sehr hohe Wärmemenge frei, die bei unzureichender Wärmeabfuhr zum Verdampfen des Wassers und in Folge zu unkontrolliertem Druckaufbau und damit zu gefährlichen Anlagenzuständen bis hin zur Explosion führen kann.

Aus Sicherheitsgründen werden deshalb Apparate und Anlagenteile, die mit diesen Metallchloriden kontaminiert sind, zur Reingung durch Hydrolyse ausgebaut. Dies verursacht neben der Unfallgefahr bei Anlagenöffnung und Transport der verunreinigten Apparate einen hohen logistischen Aufwand, um Ausfallzeiten zu vermeiden. Die damit verbundenen Sicherheitsrisiken sowie der Kostenaufwand sind erheblich.

Als Alternative ist beispielsweise in EP 1174388 A1 ein Verfahren beschrieben, bei dem die Metallchloride nach Fällung in einer Quenche aufwändig abfiltriert und damit in verwertbarer Form isoliert werden. Da es sich aber i.d.R. um Gemische an Metallchloriden handelt, ist auch hierbei die Hydrolyse und anschließende Entsorgung über eine Abwasserreinigungsanlage wirtschaftlich vorteilhafter als eine weitere aufwändige Aufreinigung. Die Hydrolyse lässt sich dann über die Dosiergeschwindigkeit des Filterkuchens steuern.

In DE 4116925 C ist die Rückgewinnung des im Destillationssumpf der direkten Synthese von Chlor- oder Organochlorsilanen chemisch gebundenen Chlors als Chlorwasserstoff durch Umsetzung mit Schwefelsäure beschrieben. Dies erfordert jedoch eine zusätzliche aufwändige verfahrenstechnische Anlage zur Freisetzung und Reinigung der HCl und die Neutralisation des schwefelsauren Rückstands.

Die Hydrolyse von AlCl₃ in salzsaurer Lösung ist in "Heats of dilution of the hydrolyzing electrolytes AlCl3, Th(NO3)4, and UO2(NO3)2 at 25°C", Lange, E.; Miederer, W., Univ. Erlangen, Germany, Zeitschrift fuer Elektrochemie und Angewandte Physikalische Chemie (1957), 61 407-9 beschrieben. Dabei wurden überraschenderweise im Gegensatz zur Hydrolyse in reinem Wasser sogar positive Hydrolyseenthalpien gemessen. Die Verwendung von Salzsäure ist aber teuer und außerdem insbesondere im Hinblick auf die Entsorgung der Hydrolyseprodukte über eine Abwasserreinigungsanlage aufgrund der zusätzlichen Wassergefährdung und der hohen Korrosivität problematisch.

Die Entfernung von AlCl₃ aus flüssigem TiCl₄ mit Hilfe von NaCl/Wasser bei hoher Temperatur ist in US 4125586 A beschrieben.

Es bestand die Aufgabe, feste hydrolysierbare Metallsalze auf einfache und gefahrlose Weise zu hydrolysieren.

Gegenstand der Erfindung ist ein Verfahren zur Abreinigung von hydrolysierbaren festen Metallsalzbelägen an Anlagenteilen im eingebauten Zustand durch Hydrolyse von Metallsalzen, die ausgewählt werden aus Aluminiumchlorid und Eisenchlorid, bei dem die Wärmefreisetzung bei der Hydrolyse der Metallsalze durch Umsetzung der Metallsalze mit wässrigen Salzlösungen von Alkali- und Erdalkalimetallchloriden von 10 Gew.-% bis Sättigungskonzentration bei der jeweiligen Temperatur verzögert wird.

Mit dem erfindungsgemäßen Verfahren kann die Hydrolysereaktion kontrolliert durchgeführt werden. Durch den Einsatz von wässrigen Salzlösungen lässt sich die Wärmefreisetzung bei der Hydrolyse der Metallsalze verzögern. Es ist damit eine sichere und kostengünstige kontinuierliche Abreinigung von Metallsalzbelägen an Anlagenteilen im eingebauten Zustand möglich.

Bei der Hydrolyse von Metallsalzbelägen nach dem erfindungsgemäßen Verfahren wird vorzugsweise eine wässrige Salzlösung mit der festen Oberfläche des Belages solange in Kontakt gebracht, bis der gewünschte Reinigungseffekt erzielt ist. Die exotherme Hydrolyse findet dann deutlich langsamer statt. Über die Salzkonzentration kann die Reaktionsgeschwindigkeit an die Wärmeabfuhr angepasst werden. Das erfindungsgemäße Verfahren ist für eine kontinuierliche Fahrweise besonders gut geeignet. Beispielsweise können Apparate wie Liebig-Rohre von anhaftenden Metallchloriden befreit werden, indem eine wässrige Salzlösung so lange durchgeleitet wird, bis der gewünschte Umsatz erreicht ist. Die vollständige Abreinigung kann mit Hilfe eines Indikators (z.B. pH-Elektrode, Temperaturmessung, elektrische Leitfähigkeitsmessung, thermische Leitfähigkeitsmessung, Brechungsindexbestimmung, Dichtemessung, Trübungsmessung) direkt an der ausströmenden wässrigen Mischung nachgewiesen werden, sodass der Vorgang auch einfach automatisiert werden kann.

Als Salze für die wässrigen Salzlösungen können sämtliche Alkalimetallchloride sowie Erdalkalimetallchloride sowie deren Hydrate eingesetzt werden. Bevorzugt werden Lösungen von Alkali metallchloriden verwendet, besonders bevorzugt Natriumchlorid. Es können auch Gemische verschiedener Salze zum Einsatz kommen. Die Reinheit der eingesetzten Salze spielt eine untergeordnete Rolle, sofern sich der Anteil an reaktiven Bestandteilen (insbesondere basische Verbindungen) lediglich im einstelligen Prozentbereich bewegt. Üblicherweise werden technische Qualitäten mit Reinheiten >90% eingesetzt. Es können auch Nebenanfallsalze aus technischen Prozessen zum Einsatz kommen. Die Herstellung der wässrigen Lösung erfolgt durch einfaches Lösen der Salze in Wasser in einer dafür geeigneten Vorrichtung, wie z.B. einem Rührwerk, gegebenenfalls bei erhöhter Temperatur, um den Lösungsvorgang zu beschleunigen. Die optimale Salzkonzentration kann durch einfache Vorversuche bestimmt werden, wobei man üblicherweise mit einer gesättigten Lösung beginnt, um unerwünschte Überhitzung zu vermeiden. Die Salzkonzentration kann von 10 Gew.-% bis Sättigungskonzentration bei der jeweiligen Temperatur liegen. Bei Natriumchlorid liegt der bevorzugte Bereich bei 25°C bei 10 bis 36 Gew.-%, besonders bevorzugt 15 bis 25 Gew.%. Bei niedrigeren Salzkonzentrationen kann es eher zu einem unerwünscht hohen Temperaturanstieg kommen als bei höheren Konzentrationen. Die Salzlösung kann entweder auf Vorrat hergestellt und in einem Behälter zwischengelagert werden oder unmittelbar vor der Anwendung frisch hergestellt werden. Generell ist es unerheblich, ob noch ungelöste Bestandteile vorhanden sind, sofern die Konzentration an gelöstem Salz im Zielbereich liegt. Aufgrund unterschiedlicher Löslichkeiten kann dies z.B. bei Salzmischungen oder technischen Salzqualitäten der Fall sein.

Als feste Metallsalze kommen beispielsweise Aluminiumchlorid und Eisenchlorid, gegebenenfalls im Gemisch mit anderen Oxiden oder Metallchloriden in Frage. Insbesondere werden Metallchloride aus der Silanproduktion eingesetzt, die Anhaftungen von flüssigen Chloriden, insbesondere von Chlor(poly)silanen, Chlor(poly)siloxanen gegebenenfalls mit Sigebundenem Wasserstoff sowie Titanchloride und Metalloxide enthalten können. Derartige Metallchloride sind Gemische aus vorwiegend Aluminiumchlorid und Eisenchloriden, Chromchloriden, CaCl₂ und gegebenenfalls weiteren Metallsalzen.

Der Hydrolysevorgang kann prinzipiell bei Temperaturen von 0°C bis 100°C durchgeführt werden. Tiefere Prozesstemperaturen sind möglich, sofern eine Schmelzpunktserniedrigung durch entsprechende Salzkonzentration dies zulässt. Es sind jedoch auch höhere Temperaturen denkbar, sofern die Verdampfung des Wassers durch Realisierung von Überdruck verhindert wird. Übliche Praxis ist die Umsetzung bei Normaldruck im Temperaturbereich bis 80°C, vorzugsweise bis 60°C, damit ein ausreichender Temperaturabstand zum Siedepunkt des Wassers gewährleistet ist und ein Druckaufbau verhindert werden kann.

Das Verfahren kann batchweise oder kontinuierlich gestaltet werden. Beim Batchprozess wird das zu hydrolysierende feste Metallsalz vorzugsweise entweder in einem geeigneten Behälter vorgelegt und die Salzlösung zugegeben oder die Salzlösung vorgelegt und über eine Feststoffdosier- oder - fördereinrichtung (Förderschnecke, Feststoffschleuse) das feste Metallsalz kontrolliert zugefügt. Vorzugsweise wird in Produktionsanlagen das erfindungsgemäße Verfahren kontinuierlich betrieben. Die zu reinigenden Apparate (Rohrleitungen, wie Liebigrohre, Behälter etc.) werden dabei möglichst im eingebauten Zustand mit der Salzlösung gespült. Dazu werden sie vorzugsweise über feste Rohrleitungsverbindungen mit der Salzlösungsversorgungseinrichtung verbunden. Dadurch lassen sich Emissionen in die Atmosphäre vermeiden. Das erfindungsgemäße Verfahren kann aber auch an ausgebauten Apparaten durchgeführt werden, die an eine spezielle Vorrichtung (Reinigungsstand) angeschlossen werden und mit der Salzlösung durchspült werden. Der Spülvorgang wird vorzugsweise durch Förderung der Salzlösung mittels Pumpe (Membranpumpe, Kreiselpumpe, Spaltrohrpumpe, Zahnradpumpe, Kolbenpumpe etc.) durchgeführt. Die Förderung der Salzlösung durch die zu reinigenden Anlagenteile kann jedoch auch durch Aufbau eines hydrostatischen Drucks z.B. mittels Hochbehälter oder durch Anlegen eines Gasdruckes (z.B. Druckluft, Stickstoff) erfolgen.

Der Durchsatz der Salzlösung wird vorzugsweise so gewählt, dass die Reinigung so rasch und so sicher wie möglich abläuft. Er richtet sich sowohl nach der Salzkonzentration in der Reinigungslösung als auch nach der Prozesstemperatur. Die optimalen Prozessparameter können mit einfachen Vorversuchen z.B. durch Messung der Temperatur am Austritt der Spülflüssigkeit ermittelt werden. Dabei wird man vorteilhafterweise zunächst möglichst hohe Salzkonzentrationen einsetzen, um eine unerwünschte Überhitzung zu vermeiden.

Die bei dem Reinigungsprozess anfallende wässrige, saure Lösung wird vorzugsweise entweder einer dafür ausgelegten Abwasserreinigungsanlage oder einem anderen Wasseraufbereitungsschritt (z.B. Neutralisation, Fällung) zugeführt, bei dem gewässerverunreinigende Bestandteile abgetrennt und gegebenenfalls einer weiteren Verwendung/Verwertung zugeführt werden können.

In den folgenden Beispielen und Vergleichsbeispielen sind, falls jeweils nicht anders angegeben, alle Mengen- und Prozentangaben auf das Gewicht bezogen und sämtliche Umsetzungen werden bei einem Druck von 0,10 MPa (abs.) durchgeführt.

### Beispiel 1: (kontinuierliches Verfahren)

In einem Versuchsstand wird eine 20%ige wässrige Natriumchloridlösung (technische Reinheit 99,5%) über eine Kreiselpumpe durch ein mit 65 kg Aluminiumchlorid aus der Rohsilanproduktion belegtes Liebigrohr mit einem Durchsatz von 100 kg/h bis zur vollständigen Auflösung des Belages gepumpt. Die Umsetzung wird bei Umgebungstemperatur (19°C) durchgeführt. Das austretende Gemisch (weiße Suspension) hat sich ohne Zusatzkühlung des Rohres auf 37°C erwärmt. Es wird kontinuierlich einer Abwassserreinigungsanlage zugeführt. Nach 1 Stunde und 39 Minuten ist keine pH-Wert-Differenz zwischen Zulauf und Ablauf mehr feststellbar, der Ablauf ist klar und der Belag vollständig abgelöst.

### Beispiel 2: (Batchversuch)

In einem 600 ml-Becherglas wird eine Lösung von 106,6 g NaCl in 276,1 g Wasser mit einem Flügelrührer bei 220 U/min gerührt und mit einem 17,7 g schweren Metallchloridbrocken aus der Chlorsilanproduktion (AlCl₃) versetzt. Die Temperatur steigt von 24°C binnen 13 Minuten auf einen Maximalwert von 44°C an und ist, nachdem sich der Feststoff nach 27 Minuten komplett gelöst hat, wieder auf 40°C abgefallen. Es entsteht dabei eine weiße Suspension.

### Beispiel 3: (Batchversuch)

In einem 600 ml-Becherglas wird eine Lösung von 84,8 g NaCl in 279,2 g Wasser mit einem Flügelrührer bei 220 U/min gerührt und mit einem 19,3 g schweren Metallchloridbrocken aus der Chlorsilanproduktion (AlCl₃) versetzt. Die Temperatur steigt von 21°C binnen 13 Minuten auf einen Maximalwert von 42°C an und ist, nachdem sich der Feststoff nach 27 Minuten komplett gelöst hat, wieder auf 39°C abgefallen. Dabei bildet sich eine weiße Suspension.

### Beispiel 4: (Batchversuch)

In einem 600 ml-Becherglas wird eine Lösung von 41,8g NaCl in 298 g Wasser mit einem Flügelrührer bei 220 U/min gerührt und mit einem 19,1 g schweren Metallchloridbrocken aus der Chlorsilanproduktion (AlCl₃) versetzt. Die Temperatur steigt von 21°C binnen 1 Minute auf einen Maximalwert von 54°C an wobei sich der Feststoff komplett gelöst hat. Dabei bildet sich eine weiße Suspension.

### Vergleichsbeispiel (Hydrolyse in Wasser):

In einem 600 ml-Becherglas werden 196,6 g Wasser vorgelegt. Unter Rühren mit dem Flügelrührer bei 220 U/min wird ein 12,6 g schwerer Metallchloridbrocken aus der Chlorsilanproduktion (AlCl₃) zugegeben. Die Temperatur steigt von 23°C binnen 30 Sekunden auf einen Maximalwert von 54°C an und ist, bis sich der Feststoff nach 1 Minute komplett gelöst hat, wieder auf 53°C abgefallen. Es entsteht eine klare Lösung.

### Beispiel 5: (Batchversuch)

In einem 600 ml-Becherglas wird eine Lösung von 48,3 g MgSO₄ in 166,9 g Wasser (15,6 g Wasser/g AlCl₃) mit einem Flügelrührer bei 220 U/min gerührt und mit einem 10,7 g schweren Metallchloridbrocken aus der Chlorsilanproduktion (AlCl₃) versetzt. Die Temperatur steigt von 20°C binnen 22 Minuten auf einen Maximalwert von 32°C an und ist, nachdem sich der Feststoff nach 100 Minuten komplett gelöst hat, wieder auf 24°C abgefallen.

### Beispiel 6: (Batchversuch)

In einem 600 ml-Becherglas wird eine Lösung von 113,2 g CaCl₂ in 212,2 g Wasser (15,6 g Wasser/g AlCl₃) mit einem Flügelrührer bei 220 U/min gerührt und mit einem 13,6 g schweren Metallchloridbrocken aus der Chlorsilanproduktion (AlCl₃) versetzt. Die Temperatur steigt von 24°C binnen 22 Minuten auf einen Maximalwert von 35°C an und ist, nachdem sich der Feststoff nach 100 Minuten komplett gelöst hat, wieder auf 27°C abgefallen.

### Beispiel 7: (Batchversuch)

In einem 600 ml-Becherglas wird eine Lösung von 235,8g MgCl₂*6H₂O in 240,2 g Wasser (15,6 g Wasser/g AlCL₃) mit einem Flügelrührer bei 220 U/min gerührt und mit einem 15,4 g schweren Metallchloridbrocken aus der Chlorsilanproduktion (AlCl₃) versetzt. Die Temperatur steigt von 25°C binnen 22 Minuten auf einen Maximalwert von 37°C an und ist, nachdem sich der Feststoff nach 60 Minuten komplett gelöst hat, wieder auf 32°C abgefallen.

### Beispiel 8: (Batchversuch)

In einem 600 ml-Becherglas wird eine Lösung von 50,3g NaCl in 255,8 g Wasser (15,6 g Wasser/g AlCl₃) mit einem Flügelrührer bei 220 U/min gerührt und mit einem 16,4 g schweren Metallchloridbrocken aus der Chlorsilanproduktion (AlCl₃) versetzt. Die Temperatur steigt von 21°C binnen 9 Minuten auf einen Maximalwert von 46°C an und ist, nachdem sich der Feststoff nach 16 Minuten komplett gelöst hat, auf 43°C abgefallen.

## Patentansprüche

1. Verfahren zur Abreinigung von hydrolysierbaren festen Metallsalzbelägen an Anlagenteilen im eingebauten Zustand durch Hydrolyse von Metallsalzen, die ausgewählt werden aus Aluminiumchlorid und Eisenchlorid, bei dem die Wärmefreisetzung bei der Hydrolyse der Metallsalze durch Umsetzung der Metallsalze mit wässrigen Salzlösungen von Alkali- und Erdalkalimetallchloriden von 10 Gew.-% bis Sättigungskonzentration bei der jeweiligen Temperatur verzögert wird.

2. Verfahren nach Anspruch 1, bei dem das feste Metallsalz Aluminiumchlorid ist.

## Claims

1. Method for removing hydrolyzable solid metal salt deposits on plant parts in the installed state by hydrolyzing metal salts selected from aluminum chloride and iron chloride, in which the release of heat in the hydrolysis of the metal salts is delayed by reacting the metal salts with aqueous salt solutions of alkali metal and alkaline earth metal chlorides of 10 wt.% to the saturation concentration at the respective temperature.

2. Method according to Claim 1, in which the solid metal salt is aluminum chloride.

## Revendications

1. Procédé de nettoyage de dépôts de sels métalliques solides hydrolysables sur des parties d'installations à l'état encastré par hydrolyse de sels métalliques qui sont choisis parmi le chlorure d'aluminium et le chlorure de fer, dans lequel la libération de chaleur lors de l'hydrolyse des sels métalliques est ralentie par mise en réaction des sels métalliques avec des solutions salines aqueuses de chlorures de métaux alcalins et alcalino-terreux de 10 % en poids à la concentration de saturation, à la température correspondante.

2. Procédé selon la revendication 1, dans lequel le sel métallique solide est le chlorure d'aluminium.
